(19) Europäisches Patentamt
European Patent Office
Office européen des brevets

(11) EP 1 307 363 B1

(12) **EUROPÄISCHE PATENTSCHRIFT**

(45) Veröffentlichungstag und Bekanntmachung des Hinweises auf die Patenterteilung:
**06.10.2004 Patentblatt 2004/41**

(21) Anmeldenummer: **01969434.8**

(22) Anmeldetag: **19.07.2001**

(51) Int Cl.^7: **B60R 21/26**

(86) Internationale Anmeldenummer:
**PCT/EP2001/008346**

(87) Internationale Veröffentlichungsnummer:
**WO 2002/014118 (21.02.2002 Gazette 2002/08)**

(54) **GASGENERATOR UND RÜCKHALTESYSTEM FÜR EIN FAHRZEUG**

GAS GENERATOR AND RESTRAINT SYSTEM FOR A VEHICLE

GENERATEUR DE GAZ ET SYSTEME DE RETENUE POUR AUTOMOBILES

(84) Benannte Vertragsstaaten:
**AT BE CH CY DE DK ES FI FR GB GR IE IT LI LU MC NL PT SE TR**

(30) Priorität: **11.08.2000 DE 10040000**
**13.11.2000 DE 10056228**

(43) Veröffentlichungstag der Anmeldung:
**07.05.2003 Patentblatt 2003/19**

(73) Patentinhaber: **Flamm, Frieder**
**52223 Stolberg (DE)**

(72) Erfinder: **Flamm, Frieder**
**52223 Stolberg (DE)**

(74) Vertreter: **Kohlmann, Kai, Dipl.-Ing.**
**Donatusstrasse 1**
**52078 Aachen (DE)**

(56) Entgegenhaltungen:
**GB-A- 1 333 959**
**US-A- 4 026 580**
**US-A- 5 433 476**
**US-A- 5 527 066**

EP 1 307 363 B1

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

Printed by Jouve, 75001 PARIS (FR)

## Beschreibung

Die Erfindung betrifft einen Gasgenerator zum Entfalten und Füllen mindestens eines Prallsacks eines Rückhaltesystems mit einem mindestens einen Verschluss aufweisenden Gasgeneratorgehäuse zur Aufnahme eines Treibstoff zur Erzeugung einer Füllgasmenge für jeden Prallsack, wobei das als Druckkammer ausgestaltete Gasgeneratorgehäuse beheizbar ist, sich in der Druckkammer eine Flüssigkeitsmenge $m_o$ einer verdampfungsfähigen Substanz befindet, die im Zustand der Betriebsbereitschaft des Gasgenerators den Energieinhalt für das Entfalten und Füllen mindestens eines Prallsacks enthält, wobei der aus den Druck- und Temperaturbedingungen (p,T) in Betriebsbereitschaft resultierende Energieinhalt (Enthalpie) der Flüssigkeitsmenge $m_o$ so zu bestimmen ist, dass im Falle der Druckentlastung der Druckkammer durch Öffnen mindestens eines Verschlusses wenigstens so viel der Flüssigkeitsmenge $m_o$ verdampft, um mindestens einen Prallsack schlagartig mit Dampf zu entfalten und zu füllen. Außerdem betrifft die Erfindung ein Rückhaltesystem für Fahrzeuge sowie ein Verfahren zum Füllen und Entfalten mindestens eines Prallsacks eines derartigen Rückhaltesystems.

Rückhaltesysteme kommen in Fahrzeugen aller Art, insbesondere Landfahrzeugen, Schiffen und Luftfahrzeugen zum Einsatz.

Die aus dem Stand der Technik bekannten Rückhaltesysteme, auch als Airbag oder Äirbagsystem bezeichnet, bestehen aus einer Vorrichtung zur Erzeugung der Füllgasmenge (Gasgenerator) und dem zumeist textilen Prallsack sowie einer den Gasgeneretor steuernden und/oder regelnden Auslöse- und Überwachungseinheit. Dieser Prallsack schützt Fahrzeuginsassen vor dem Aufprall auf Fahrzeuginnenteile, wie beispielsweise das Lenkrad oder die Seitenverkleidung. Die Auslöse- und Überwachungseinheit ist in Kraftfahrzeugen üblicherweise im Zentraltunnel im Bereich der Schaltkulisse angeordnet.

Man unterscheidet pyrotechnische Gasgeneratoren von sogenannten Hybridgasgeneratoren. Die Gaserzeugung erfolgt bei pyrotechnischen Gasgeneratoren durch einen pyrotechnischen Treibstoff, der im Bedarfsfall gezündet wird. Das durch Abbrand des Treibstoffes entstehende Stickstoffgas gelangt durch Öffnungen des Gasgeneratorgehäuses in den Prallsack und entfaltet und füllt diesen in etwa 30 ms. Die Zündung des Treibsatzes erfolgt durch eine Anzündeinheit (AZE), die mittels elektrischem Impuls gezündet wird, den die Auslöseund Überwachungseinheit erzeugt. Der pyrotechnische Treibstoff besteht aus Natriumazid/Caliumnitrat/Sand und ist in Tablettenform gepresst. Da dieser Treibstoff eine giftige Substanz ist, wird er in zunehmendem Maße durch natriumazidfreie Treibstoffe ersetzt. Diese haben wiederum den Nachteil, dass sie Abbrandgase mit sehr hohen Gastemperaturen und sehr hohem Schlackeanteil erzeugen.

Eine Abwandlung des pyrotechnischen Gasgenerators ist die Ausführung als Hybridgasgenerator. Die Füllgasmenge wird größtenteils durch ein unter hohem Druck in einem Druckgasbehälter mitgeführtes Füllgas (z. B. Argon bei ca. 300 bar) und zu einem kleinen Teil durch Abbrand eines pyrotechnischen Treibstoffes erzeugt. Der pyrotechnische Treibstoff öffnet den mit einem Gasgemisch bis zu 250 bar vorgespannten. Druckbehälter und erwärmt das ausströmende Füllgas, damit ein Einfrieren an der Verschlüssen und Gasführungskanälen aufgrund der expansionsbedingten Abkühlung vermieden wird. Hybridgasgeneratoren finden in Kraftfahrzeugen, insbesondere für Fahrer-, Beifahrer und Seitenairbags Einsatz.

Die Verwendung pyrotechnischer Treibstoffe sowohl in pyrotechnischen Gasgeneratoren als auch in Hybridgasgeneratoren stellt hohe Anforderungen an die Herstellung und den Einbau der Systemkomponenten:

Beim Abbrand pyrotechnischer Treibsätze treten Temperaturen von bis zu 2000 °C auf. Das mit den hohen Temperaturen verbundene Gefährdungspotential wird in Anbetracht der lebensrettenden Wirkung des Rückhaltesystems billigend in Kauf genommen.

Ein weiteres Problem der pyrotechnischen Rückhaltesysteme ist deren Entsorgung. Diese erfordert eine sorgfältige und sicherheitstechnisch unbedenkliche Demontage und Neutralisation der Treibsätze. Unkontrollierte Entsorgung von Altfahrzeugen mit pyrotechnischen Treibstoffen oder Treibsatzkomponenten stellt ein erhebliches Gefährdungspotential für die Sicherheit und für die Umwelt dar.

Um bei pyrotechnischen Gasgeneratoren mit azidfreien Treibstoffen die hohen Temperaturen der Abbrandgase sowie die hohen Schlackenanteile der Gase zu reduzieren, wurde in der DE 196 125 81 A1 bereits ein Gasgenerator vorgeschlagen, bei dem in der Brennkammer neben dem pyrotechnischen Treibstoff eine verdampfungsfähige Substanz vor den Austrittsöffnungen angeordnet ist. Durch Energieaustausch zwischen dem Abbrandgas und der verdampfungsfähigen Substanz lässt sich der Energiegehalt des pyrotechnischen Treibstoffes mit geringem Verlust für das Entfalten und Füllen des Prallsacks erhalten. Der Energieaustausch bewirkt eine Verdampfung der verdampfungsfähigen Substanz und führt folglich zu einer Abkühlung des Abbrandgases und damit zu einer Abnahme der Schlakkenstoffe. Die Füllgasmenge für den Prallsack setzt sich in erster Linie aus dem Abbrandgas des pyrotechnischen Treibstoffes sowie dem infolge des Energieaustausches gebildeten Dampf zusammen. Als Vorteil dieser Maßnahme wird angegeben, dass die thermische Energie des Abbrandgases zur Verdampfung der verdampfungsfähigen Substanz eingesetzt wird und das Abbrandgas nicht durch Gehäuseteile abgekühlt wird.

Die Anordnung der verdampfungsfähigen Substanz als Zusatzmaßnahme in dem Gasgenerator senkt zwar die Temperatur der Füllgasmenge und erlaubt den Einsatz ungiftiger pyrotechnischer Treibstoffe, ohne jedoch weitere Anforderungen an Gasgeneratoren zufriedenstellend zu erfüllen. Hervorzuheben ist die sichere Handhabung des Gasgenerators, die thermische Stabilität, die umweltfreundliche Entsorgung sowie die kostengünstige Herstellung.

Schließlich geht aus der gattungbildenden GB 1333959 A eine Sicherheitsvorrichtung für ein Kraftfahrzeug hervor, bei der ein Arbeitsmedium, eine Mischung aus Flüssigkeit und Dampf, in einem Behälter gespeichert wird. Das Arbeitsmedium wird in dem Behälter erhitzt, so dass sich deren Druck und Enthalpie bei konstantem Volumen ändern. Eine Heizung hält die Temperatur aufrecht, um das Arbeitsmedium in einem flüssigen Zustand zu halten. Bei einem Unfall wird eine Dichtungsplatte von dem Behälters mittels einer Sprengeinrichtung gelöst, so dass das Arbeitsmedium augenblicklich verdampft und in einen Prallsack der Sicherheitsvorrichtung strömen kann. Während dieser Zustandsänderung wird der Druck des Arbeitsmediums reduziert, während sich das Volumen stark vergrößert. Als bevorzugtes Arbeitsmedium werden fluorierte Kohlenwasserstoffe genannt.

Ausgehend von diesem Stand der Technik liegt der Erfindung die Aufgabe zugrunde, einen Gasgenerator für ein Rückhaltesystem zu schaffen, der unter Beibehaltung ungiftiger Ausgangsmaterialien für den Treibstoff die genannten Anforderungen besser erfüllt. Außerdem liegt der Erfindung die Aufgabe zu Grunde ein Verfahren zur Erzeugung einer Füllgasmenge für einen Prallsack eines Rückhaltesystems zu schaffen.

Die Lösung dieser Aufgabe beruht auf dem Gedanken, dass zur Erzeugung der Füllgasmenge ausschließlich ein Treibstoff verwendet wird, der sich im Zustand der Betriebsbereitschaft des Gasgenerators in der flüssigen Phase befindet und im Bedarfsfall, das heißt bei einer Auslösung des Rückhaltesystems, schlagartig verdampft.

Im einzelnen wird die Aufgabe bei einem Gasgenerator der eingangs erwähnten Art dadurch gelöst, dass die verdampfungsfähige flüssige Substanz Wasser ist.

Durch den Einsatz von Wasser als verdampfungsfähige Substanz, entfallen die bei pyrotechnischen Treibstoffen notwendigen Sicherheitsanforderungen bei der Herstellung, Verarbeitung, Lagerung, Entsorgung, Wartung, Instandsetzung sowie Transport der Gasgeneratoren.

Der vollständige Verzicht auf eine pyrotechnische Gaserzeugung bietet darüber hinaus den Vorteil, dass sich durch gezielte Steuerung des Verschlusses abhängig von der Unfallart und dem zu befüllenden Prallsack die freigesetzte Füllgasmenge steuern lässt. Gesteuerte Füllgasmengen stellen bei pyrotechnischen Treibstoffen nach deren Zündung ein kaum lösbares Problem dar.

Bei der Verdampfung dehnt sich das Volumen des Wassers auf das 800- bis 1000-fache aus. Die für die Verdampfung benötigte Verdampfungswärme wird bereitgestellt, indem die verdampfungsfähige Substanz im Zustand der Betriebsbereitschaft einen Wärmeinhalt mit sich führt der ausreicht, die für die erforderliche Füllgasmenge benötigte Flüssigkeitsmenge zu verdampfen. Dies erfordert einen hohen Druck in der Druckkammer (z. B. 200 bar) und eine der Dampfdruckkurve entsprechende Temperatur.

Das Wasser kann entweder in unmittelbarer Nähe jedes einzelnen Prallsacks oder räumlich getrennt in einer separaten Druckkammer bevorratet sein. In einer Ausgestaltung der Erfindung ist eine zentrale Bevorratung des Wassers für mehrere oder alle in einem Luft-, Wasser- oder Landfahrzeug vorhandene Prallsäcke in einer einzigen Druckkammer vorgesehen. In diesem Fall wird die erforderliche Füllgasmenge mit Hilfe von Leitungen und Absperr- und/oder Verteilorganen auf die einzelnen Prallsäcke verteilt, wenn das Rückhaltesystem ausgelöst wird.

Ein weiterer Vorteil des erfindungsgemäßen Gasgenerators besteht darin, dass für die Erzeugung der Füllgasmenge keine Anzündeinheit mehr erforderlich ist, die die Erzeugung der Füllgasmenge aus dem Treibstoff auslöst. Bei dem erfindungsgemäßen Gasgenerator genügt zur Freisetzung des Füllgases eine Druckentlastung der Druckkammer, des im Betriebszustand befindlichen Gasgenerators. Der Betriebszustand wird nach druckloser Befüllung der Druckkammer bei Umgebungstemperatur dadurch erreicht, dass das Wasser in der verschlossenen Druckkammer soweit aufgeheizt wird, bis das Wasser den für die Verdampfung erforderlichen Energieinhalt aufweist, um mindestens einen Prallsack schlagartig zu entfalten und mit Dampf zu füllen.

Um den Gasgenerator in Betriebsbereitschaft zu versetzen und zu halten, ist an der Druckkammer daher mindestens eine Heizvorrichtung angeordnet, die vorzugsweise als elektrische Widerstandsheizung und/oder als Elektrodenkessel ausgestaltet ist. Die Heizenergie kann dann dem elektrischen Bordnetz des Fahrzeuges entnommen werden. Die elektrische Energie zum Erreichen und Erhalten des Betriebszustandes des Rückhaltesystems wird jedoch zweckmäßigerweise nur dann aus dem elektrischen Bordnetz gewonnen, wenn in einem Energiespeicher des Bordnetzes, insbesondere der Starterbatterie für den Fahrzeugantrieb, eine definierte Restenergie vorhanden ist. Alternativ oder zusätzlich kann die Heizenergie aus anderen Wärmequelle des Fahrzeuges gewonnen werden, beispielsweise aus der Abwärme des Abgases oder einer Standheizung.

Um zum Erhalt der Betriebsbereitschaft die Wärmeströme aus der Druckkammer nach Außen zu reduzieren, ist die Druckkammer isoliert. Neben hochisolierenden Dämmstoffen kommt insbesondere eine Vakuumisolierung in Betracht. Die Wirksamkeit der Isolierung kann elektronisch ständig überwacht werden, um einen Defekt festzustellen und zu signalisieren. Die Auslöse- und Überwachungseinheit misst ohnehin fortlaufend die Temperatur der verdampfungsfähigen Substanz, um die Heizvorrichtung zu steuern. Tritt ein unerwarteter Temperaturabfall während der Betriebsbereitschaft auf, deutet dies auf einen Defekt der Isolierung hin und kann signalisiert werden.

Um den Gasgenerator in Betriebsbereitschaft zu halten, kann eine separate Kompensationsheizung zum Ausgleich der Wärmeverluste der verdampfungsfähigen Substanz an die Umgebung vorgesehen sein. Abhängig von der Stillstandsdauer des Fahrzeuges kann die Kompensationsheizung unterschiedlich betrieben werden. Bei kurzem Stillstand des Fahrzeugs hält sie die Betriebsbereitschaft aufrecht, während bei Stillständen mittlerer Dauer zunächst der Ladezustand der Batterie überprüft wird, um bei ausreichender Restenergie die verdampfungsfähige Substanz auf einer reduzierten Temperatur zu halten. Dauert die Stillstandszeit weiter an, und unterschreitet der Ladezustand der Batterie trotz der reduzierten Temperatur der Kompensationsheizung die notwendige Restenergie, so wird die Heizvorrichtung für den Rest der Stillstandszeit vollständig abgeschaltet, damit ausreichend Restenergie für den späteren Startvorgang des Fahrzeugantriebs erhalten bleibt. Die nach jedem längeren Stillstand in der Druckkammer herrschende Temperatur und die ggf. erforderliche Aufheizdauer nach dem Fahrzeugstart wird vorzugsweise am Armaturenträger angezeigt.

Die Druckkammer besteht aus einem für das Wasser undurchlässigen, wärme- und druckbeständigem Material, vorzugsweise aus beschichtetem und/oder nichtrostendem Stahl, Laminaten sowie Kohlefaserverbundwerkstoffen.

Der erfindungsgemäße Gasgenerator findet vorzugsweise in Rückhaltesystemen für Fahrzeuge mit mindestens einem mit einem Gasgenerator verbunden Prallsack sowie mindestens einer den Gasgenerator steuernden und/oder regelnden Auslöse- und Überwachungseinheit Einsatz. Die Auslöse- und Überwachungseinheit hat die Aufgabe, die Stärke der Verzögerung zu erkennen und abhängig davon den Gasgenerator innerhalb weniger Millisekunden zu aktivieren und die Funktionen des Rückhaltesystems fortlaufend zu überwachen. Die Fahrzeugverzögerung wird über Sensoren elektronisch gemessen. Überschreitet die Verzögerung einen bestimmten Grenzwert wird über die Auslöseund Überwachungseinheit der Verschluss der Druckkammer geöffnet, indem die Auslöse- und Überwachungseinheit beispielsweise ein elektromagnetisch betätigtes Ventil ansteuert oder über einen Dorn eine Membran in der Druckkammer zerstört.

Nachfolgend wird die Erfindung der Figuren näher erläutert. Es zeigen:

**Figur 1** eine Prinzipdarstellung eines Rückhaltesystems mit einem erfindungsgemäßen Gasgenerator,

**Fig. 2,3** prinzipielle Darstellungen der Wirkungsweise eines erfindungsgemäßen Gasgenerators ,

**Figur 4** eine schematische Darstellung eines erfindungsgemäßen Gasgenerators mit Feststoffisolierung und einem Ventil,

**Figur 5** einen erfindungsgemäßen Gasgenerator mit einer Vakuumisolierung und einem Ventil,

**Figur 6** einen erfindungsgemäßen Gasgenerator mit einer Heizspirale,

**Fig. 7a,7b** einen erfindungsgemäßen Gasgenerator mit Heizstäben,

**Figur 8** einen erfindungsgemäßen Gasgenerator mit Feststoffisolierung und einer Membrane.

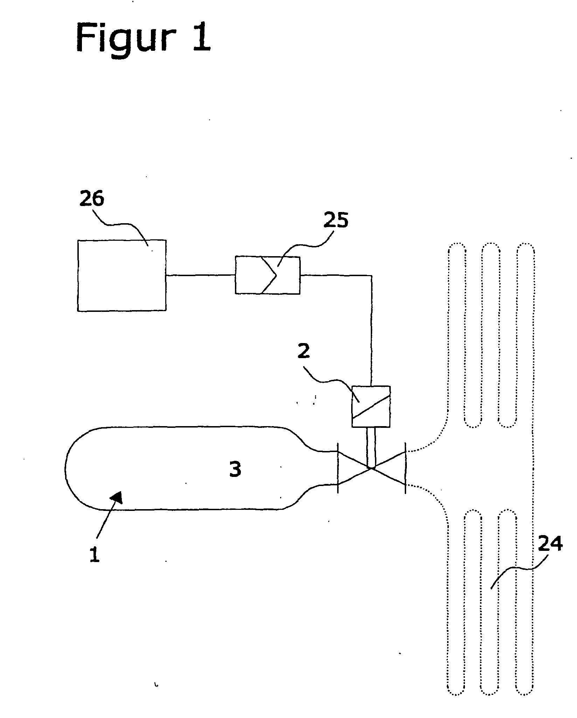

Ein Rückhaltesystem für Fahrzeuge nach Figur 1 besteht aus einem mit einem Gasgenerator 1 verbundenen Prallsack 24 sowie einer Auslöse- und Überwachungseinheit 25. Die Auslöse- und Überwachungseinheit 25 registriert über eine Sensorik 26 das Überschreiten definierter Verzögerungswerte, wie sie beispielsweise bei schweren Unfällen auftreten. Zum Auslösen des Gasgenerators 1 steuert die Auslöse- und Überwachungseinheit 25 einen als Magnetventil ausgebildeten Verschluss 2 an, um eine Druckentlastung des in der Druckkammer 3 mitgeführten erhitzten Wassers auszulösen. Die Druckentlastung bewirkt eine schlagartige, im technischen Sinne verzögerungsfreie Verdampfung des Wassers. Der sich bildende Dampf entfaltet und füllt den Prallsack 24.

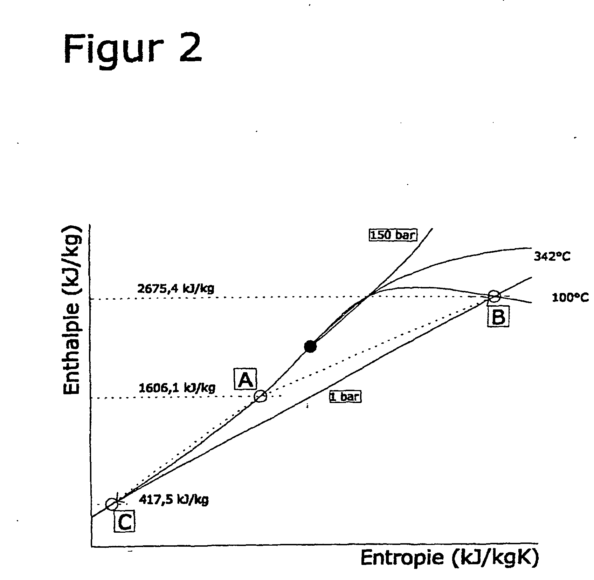

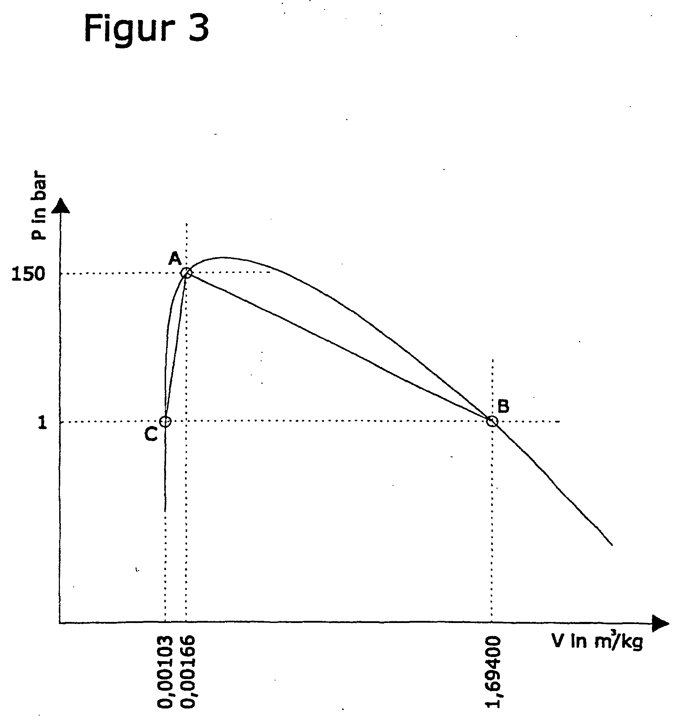

Figuren 2 und 3 verdeutlichen, wie das im Zustand der Betriebsbereitschaft A in der flüssigen Phase befindliche Wasser bei einer Auslösung des Rückhaltesystems durch Druckentlastung der Druckkammer 3, im technischen Sinne verzögerungsfrei verdampft. Die in den Figuren 2 und 3 enthaltenen Zahlenwerte gelten für Wasser. Im Zustand der Betriebsbereitschaft A steht das Wasser unter einem hohen Druck und weist eine diesem Druck entsprechende hohe Temperatur gemäß der Dampfdruckkurve der verdampfungsfähigen Substanz Wasser auf: (Druck 150 bar, Temperatur 342 °C und Enthalpie 1.606 kJ/kg). In diesem Zustand hat das Wasser ein spezifisches Volumen von 1,658 Liter pro kg (vgl. Fig. 3). Bei Druckentlastung der Druckkammer 3, das heißt nach Auslösen des Rückhaltesystems, reduziert sich der Druck auf den Umgebungsdruck von etwa 1 bar und die Flüssigkeitsmenge $m_o$ des Wassers in der Druckkammer 3 nimmt anteilig jeweils einen dampfförmigen Zustand B und einen flüssigen Zustand C an. Der Dampf hat bei einem Druck von 1 bar eine Enthalpie von 2.675 kJ/kg, eine Temperatur von 100 °C und ein spezifische Volumen von 1,694 Kubikmeter pro kg (Fig.3).

Gegenüber dem Zustand A hat sich das spezifische Volumen um den Faktor 1000 vergrößert. Die Volumenzunahme ist insbesondere deutlich in Figur 3 erkennbar. Ein im Behälter verbleibender Anteil des Wassers befindet sich im flüssigen Zustand C mit den Größen 1 bar, 100 °C und der Enthalpie von 417,5 kJ/kg. Das spezifische Volumen beträgt 1,03 Liter pro kg (Fig.3). Die Massenanteile, in die sich das Wasser bei der Druckentlastung aufteilt, ergeben sich aus der Enthalpiebilanz: Der Energieinhalt des Wassers im Zustand A ist gleich der Summe der Energieinhalte der anteiligen Massen in der Zuständen B und C. Energieverluste sind beim Übergang vom Zustand.A in B und C aufgrund der verzögerungsfreien Änderung vernachlässigbar klein. In dem Zahlenbeispiel ergibt sich aus dieser Enthalpiebilanz ein Verhältnis von

$$0{,}53: 1 \{(1.606{,}1 - 417{,}5):(2.675{,}4 - 417{,}5)\}$$

für die Masse im Zustand B zur Masse im Zustand A.

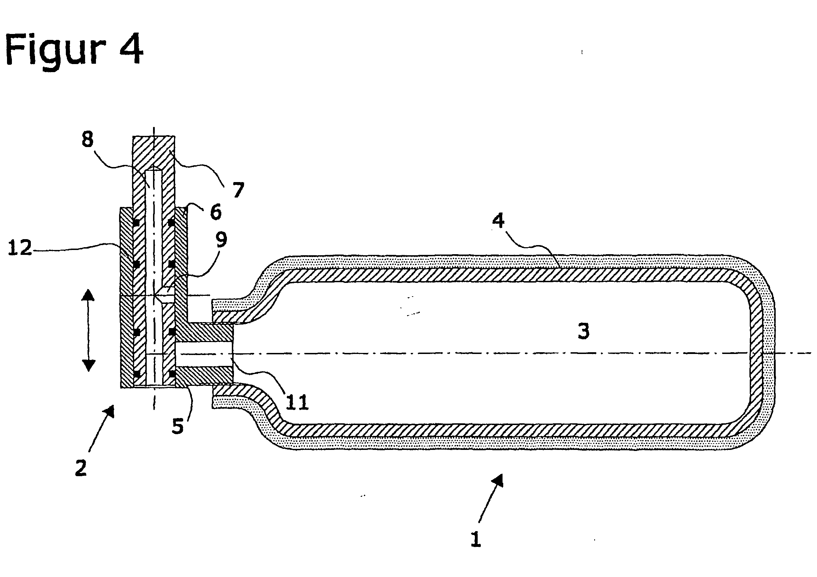

Figur 4 zeigt ein Beispiel für einen geeigneten Gasgenerator 1, dessen Druckkammer 3 mit Wasser als verdampfungsfähiger Substanz gefüllt ist. Die Druckkammer 3 ist von einer Isolierung 4 umgeben und mittels einer in Figur 2 nicht dargestellten Heizvorrichtung beheizbar. Die Wassermenge enthält im Betriebszustand des Gasgenerators den Energieinhalt für das Entfalten und Füllen des in Figur 4 nicht dargestellten Prallsacks 24. Der Betriebszustand der Druckkammer 3 wird dadurch erreicht, dass die Heizvorrichtung das Wasser soweit aufheizt, bis die Wassermenge den für die Verdampfung erforderlichen Energieinhalt aufweist, um den nicht dargestellten Prallsack 24 schlagartig, das heißt, in etwa 10 - 30 Millisekunden zu entfalten und mit Dampf zu füllen. Die Isolierung 4 vermindert die Wärmeabgabe des Wassers an die Umgebung und reduziert damit die zur Aufrechterhaltung des Betriebszustandes nachzuführende Wärmeenergie.

Der Verschluss 2 im Ausführungsbeispiel nach Figur 4 ist als Ventil ausgebildet. In einem Führungsblock 6 mit einem zylindrischen Durchgang ist ein zylindrischer Stift 7 mit einer Durchlassöffnung 8 verschieblich angeordnet. Etwa mittig mündet in die Durchlassöffnung 8 ein Querkanal 9, der durch Verschieben des Stiftes in Übereinstimmung mit einem Auslas 11, der Druckkammer 3 gebracht werden kann. Mehrere O-Ringe 12 dichten den zylindrischen Stift 7 gasdicht gegen den Führungsblock 6 ab. Der Stift 7 lässt sich beispielsweise durch einen in der Figur 4 nicht dargestellten Elektromagneten in Pfeilrichtung verschieben, den die Auslöse- und Überwachungseinheit 25 ansteuert. An einem stirnseitigen Stutzen 5 des Verschlusses 2 wird entweder unmittelbar der nicht dargestellte Prallsack 24 oder eine Versorgungsleitung angeschlossen, die den dann räumlich entfernten Prallsack mit Dampf versorgt.

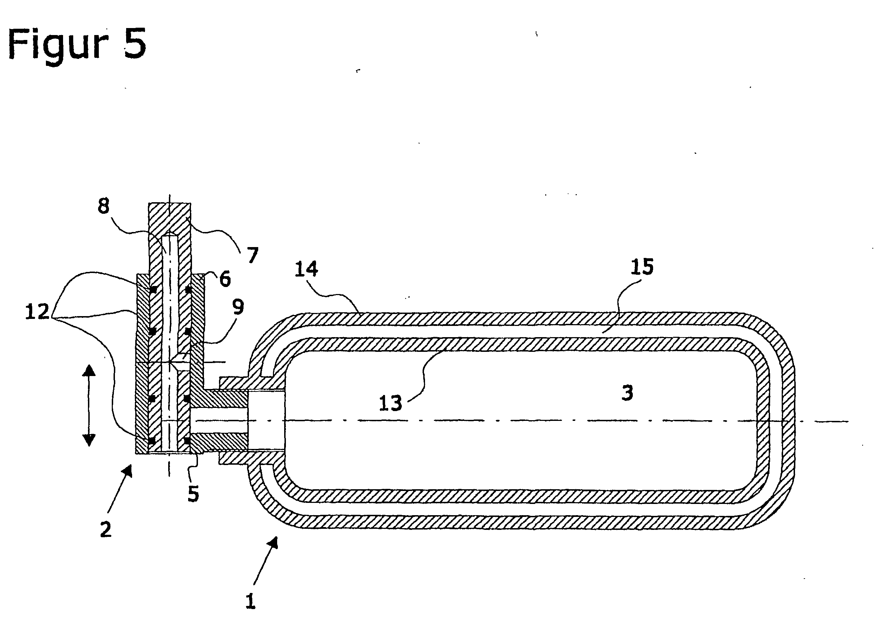

Der Gasgenerator 1 nach Figur 5 weist einen übereinstimmenden Verschluss 2, wie der Gasgenerator nach Figur 4 auf, so dass insoweit auf die dortigen Erläuterung Bezug genommen wird. Die Druckkammer 3 weist jedoch einen doppelwandigen Aufbau auf. Zwischen den Wänden 13, 14 befindet sich ein evakuierter Ringraum 15, der als Isolator die Druckkammer 3 umgibt.

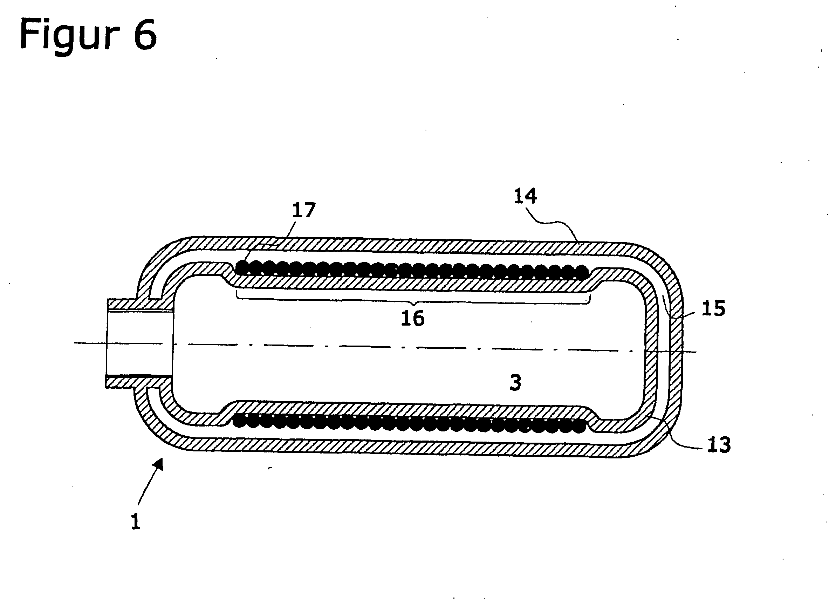

Figur 6 zeigt einen Gasgenerator 1 der ebenfalls einen Ringraum 15 zu Isolationszwecken aufweist. Die Wand 13 weist einen eingeschnürten Bereich 16 auf, um den eine Heizspirale 17 gewickelt ist. Über in Figur 6 nicht dargestellte elektrische Leitungen wird die Heizspirale 17 aus dem elektrischen Bordnetz eines Fahrzeuges mit elektrischer Energie versorgt. Nicht dargestellt in Figur 6 ist der Verschluss 2 zur Druckentlastung der Druckkammer 3 sowie die Versorgungsleitungen für die Heizspirale 17.

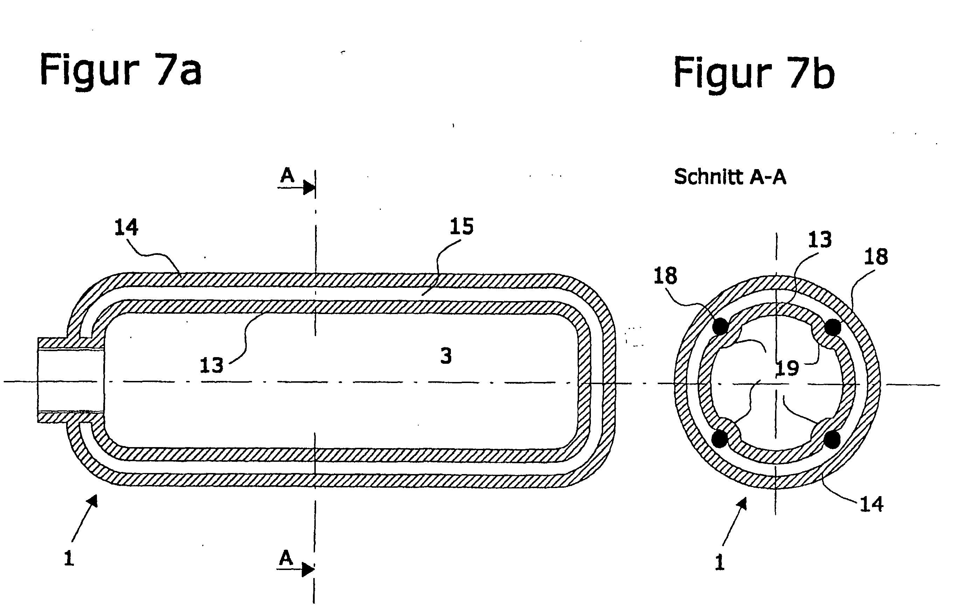

Figur 7a, 7b zeigen schließlich einen Gasgenerator 1 mit in Achsrichtung der Druckkammer 3 verlaufenden Heizstäben 18, die in dem isolierenden Ringraum 15 in axial verlaufenden Mulden 19 der Wand 13 eingebettet sind. Nicht in den Figuren 7a,7b dargestellt sind der Verschluss 2 sowie die elektrischen Versorgungsleitungen für die Heizstäbe 18.

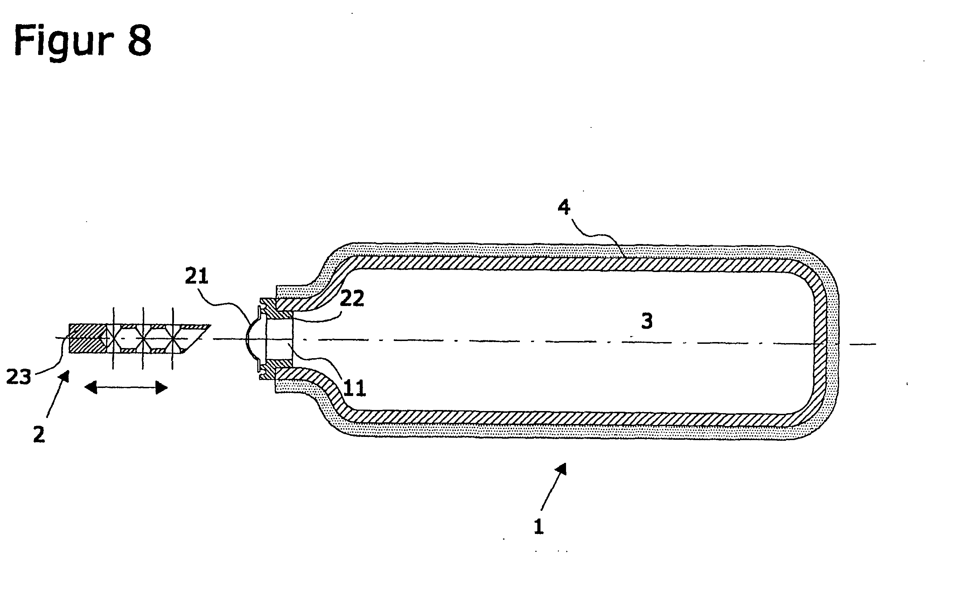

Figur 8 zeigt schließlich einen Gasgenerator 1 mit einer Druckkammer 3, die im Aufbau mit der nach Figur 4 übereinstimmt, sich jedoch hinsichtlich des Verschlusses 2 unterscheidet. Der Verschluss 2 besteht aus einer Membran 21, die an ihrem äußeren Rand fest mit einem Einsatzstück 22 verbunden ist, das wiederum in den Auslaß 11 der Druckkammer 3 eingeschraubt ist. Ein in Achsrichtung der Druckkammer 3 verschieblicher Dorn 23 wird bei Auslösung des Rückhaltesystems durch in Figur 8 nicht dargestellte Verschiebemittel, wie beispielsweise ein Elektromagnet oder ein pyrotechnischer Treibsatz in Richtung der Membran 21 verschoben. Der Dorn 23 zerstört dabei die Membran 21, so dass es zu Druckentlastung des Wassers in der Druckkammer 3 und einer Entfaltung und Füllung des nicht dargestellten Prallsacks 24 kommt.

**Bezugszeichenliste**

| Nr. | Bezeichnung |
|---|---|
| 1. | Gasgenerator |
| 2. | Verschluss |
| 3. | Druckkammer |
| 4. | Isolierung |
| 5. | Stutzen |
| 6. | Führungsblock |
| 7. | zylindrischer Stift |
| 8. | Durchlassöffnung |

(fortgesetzt)

| Nr. | Bezeichnung |
|---|---|
| 9. | Querkanal |
| 10. | ----------- |
| 11. | Auslaß |
| 12. | O-Ringe |
| 13. | Wand |
| 14. | Wand |
| 15. | Ringraum |
| 16. | Einschnürung |
| 17. | Heizspirale |
| 18. | Heizstäbe |
| 19. | Mulde |
| 20. | ----------- |
| 21. | Membran |
| 22. | Einsatzstück |
| 23. | Dorn |
| 24. | Prallsack |
| 25. | Auslöse- und Überwachungseinheit |
| 26. | Sensorik |

**Patentansprüche**

**1.** Gasgenerator zum Entfalten und Füllen mindestens eines Prallsacks eines Rückhaltesystems mit einem mindestens einen Verschluss aufweisenden Gasgeneratorgehäuse zur Aufnahme eines Treibstoff zur Erzeugung einer Füllgasmenge für jeden Prallsack, wobei der Treibstoff zumindest eine verdampfungsfähige flüssige Substanz aufweist, die nicht brennbar ist, das als Druckkammer ausgestaltete Gasgeneratorgehäuse beheizbar ist, sich in der Druckkammer eine Flüssigkeitsmenge $m_o$ einer verdampfungsfähigen Substanz befindet, die im Zustand der Betriebsbereitschaft des Gasgenerators den Energieinhalt für das Entfalten und Füllen mindestens eines Prallsacks enthält, wobei der aus den Druck- und Temperaturbedingungen (p,T) in Betriebsbereitschaft resultierende Energieinhalt (Enthalpie) der Flüssigkeitsmenge $m_o$ so zu bestimmen ist, dass im Falle der Druckentlastung der Druckkammer durch Öffnen mindestens eines Verschlusses wenigstens so viel der Flüssigkeitsmenge $m_o$ verdampft, um mindestens einen Prallsack schlagartig mit Dampf zu entfalten und zu füllen, **dadurch gekennzeichnet, dass** die verdampfungsfähige flüssige Substanz Wasser ist.

**2.** Gasgenerator nach Anspruch 1, **dadurch gekennzeichnet, dass** die Druckkammer (3) mindestens eine Heizvorrichtung (17,18) aufweist, um den Gasgenerator in Betriebsbereitschaft zu versetzen und zu halten.

**3.** Gasgenerator nach Anspruch 2, **dadurch gekennzeichnet, dass** die Heizvorrichtung als elektrische Widerstandsheizung (17, 18) und/oder als Elektrodenkessel ausgestaltet ist.

**4.** Gasgenerator nach einem der Ansprüche 1 bis 3, **dadurch gekennzeichnet, dass** jeder Verschluss (2) der Druckkammer (3) als Ventil oder Membran (21) ausgestaltet ist.

**5.** Gasgenerator nach einem der Ansprüche 1 bis 4, **dadurch gekennzeichnet, dass** der Treibstoff ausschließlich die verdampfungsfähige flüssige Substanz aufweist.

**6.** Gasgenerator nach einem der Ansprüche 1 bis 5, **dadurch gekennzeichnet, dass** die Druckkammer (3) aus einem für Wasser undurchlässigen, wärme- und druckbeständigem Material besteht.

**7.** Gasgenerator nach einem der Ansprüche 1 bis 6, **dadurch gekennzeichnet, dass** die Druckkammer (3) eine Isolierung (4), insbesondere Vakuumisolierung aufweist.

**8.** Rückhaltesystem für Fahrzeuge mit mindestens einem mit einem Gasgenerator verbundenen Prallsack sowie mindestens einer den Gasgenerator steuernden und/oder regelnden Auslöse- und Überwachungseinheit, **gekennzeichnet durch** einen Gasgenerator (1) nach einem oder mehreren der Ansprüche 1 bis 7.

**9.** Verfahren zum Füllen und Entfalten mindestens eines Prallsacks eines Rückhaltesystems insbesondere nach Anspruch 9, wobei die Füllgasmenge zum Füllen und Entfalten mindestens eines Prallsacks durch Verdampfung einer verdampfungsfähigen flüssigen Substanz erzeugt wird, wobei die im Bedarfsfall erforderliche Verdampfung durch eine Druckentlastung der flüssigen Substanz herbeigeführt wird, **dadurch gekennzeichnet, dass** die Verdampfungsfähige flüssige Substang Wasser ist.

**10.** Verfahren nach Anspruch 9, **dadurch gekennzeichnet, dass** eine Flüssigkeitsmenge $m_o$ des Wassers, in einer mindestens einen Verschluss aufweisenden Druckkammer mitgeführt wird, wobei der Energieinhalt der Flüssigkeitsmenge $m_o$ durch Erhöhen des Drucks und der Temperatur (p,T) über die Umgebungstemperatur sowie den Umgebungsdruck so zu bestimmen ist, dass bei Druckentlastung der Druckkammer durch Öffnen mindestens eines Verschlusses wenigstens so viel des Flüssigkeitsmenge $m_o$ verdampft, damit mindestens ein Prallsack schlagartig entfaltet und mit Dampf gefüllt wird.

**11.** Verfahren nach Anspruch 9 oder 10, **dadurch gekennzeichnet, dass** dem Wasser ein Inertgas beigegeben wird.

**12.** Verfahren nach einem der Ansprüche 9 bis 11, **dadurch gekennzeichnet, dass** zum Erreichen und Erhalten der Betriebsbereitschaft des Rückhaltesystems das Wasser in der verschlossenen Druckkammer soweit aufgeheizt wird, bis die Flüssigkeitsmenge $m_o$ des Wassers den für die Verdampfung erforderlichen Energienhalt aufweist, um mindestens einen Prallsack schlagartig zu entfalten und mit Dampf zu füllen.

**13.** Verfahren nach Anspruch 12, **dadurch gekennzeichnet, dass** die Heizenergie zum Erreichen und Erhalten der Betriebsbereitschaft des Rückhaltesystems aus einem elektrischen Bordnetz eines Fahrzeuges und/oder aus einer anderen Wärmequelle des Fahrzeuges gewonnen wird.

**14.** Verfahren nach Anspruch 13, **dadurch gekennzeichnet, dass**, die Abwärme des Antriebs des Fahrzeugs als Energiequelle genutzt wird.

**15.** Verfahren nach Anspruch 12 oder 13, **dadurch gekennzeichnet, dass** die Energie zum Erreichen und Erhalten des Betriebszustandes des Rückhaltesystems aus einem elektrischen Bordnetz nur dann gewonnen wird, wenn in einem Energiespeicher des Bordnetzes eine definierte Restenergie vorhanden ist.

**16.** Verfahren nach einem der Ansprüche 9 bis 15, **dadurch gekennzeichnet, dass** die Füllgasmenge zum Füllen und Entfalten von mehreren Prallsäcken durch eine zentrale Verdampfung von Wasser erzeugt wird, wobei die erforderliche Füllgasmenge mit Hilfe von Leitungen und Absperrund/oder Verteilorganen auf die einzelnen Prallsäcke verteilt wird.

## Claims

**1.** A gas generator for unfolding and filling at least one impact cushion of a restraint system with a gas generator housing having at least one seal for receiving a fuel to generate a quantity of filler gas for each impact cushion, whereby the fuel has at least one evaporative liquid substance, which is not combustible, the gas generator housing designed as a pressure chamber (3) can be heated, and a quantity of liquid $m_o$ of an evaporative substance is in the pressure chamber, which contains the energy content for the unfolding and filling of at least one impact cushion (24) when the gas generator is in a state ready for service, whereby the energy content (enthalpy) of the quantity of liquid $m_o$ resulting from the pressure and temperature conditions (p,T) in readiness for service is to be determined such that in the event of a release of pressure in the pressure chamber by opening of at least one seal (2) at least a sufficient quantity of liquid $m_o$ is evaporated, to abruptly unfold and fill at least one impact cushion (24) with vapour, **characterised in that** the evaporative liquid substance is water.

**2.** The gas generator as claimed in Claim 1, **characterised in that** the pressure chamber (3) has at least a heating device (17,18) to bring and keep the gas generator in readiness for service.

**3.** The gas generator as claimed in Claim 2, **characterised in that** the heating device is designed as electric resistance heating (17,18) and/or as an electrode boiler.

**4.** The gas generator as claimed in any one of Claims 1 to 3, **characterised in that** each seal (2) of the pressure chamber (3) is designed as a valve or membrane (21).

**5.** The gas generator as claimed in any one of Claims 1 to 4, **characterised in that** the fuel has exclusively the evaporative liquid substance.

**6.** The gas generator as claimed in any one of Claims 1 to 5, **characterised in that** the pressure chamber (3) comprises a heat- and pressure-resistant material impermeable for water.

**7.** The gas generator as claimed in any one of Claims 1 to 6, **characterised in that** the pressure chamber (3) has insulation (4), in particular vacuum insulation.

**8.** A restraint system for vehicles with at least one impact cushion connected to a gas generator, as well as at least one triggering and monitoring unit controlling and/or regulating the gas generator, **characterised by** a gas generator (1) as claimed in any one of Claims 1 to 7.

**9.** A process for filling and unfolding at least one impact cushion of a restraint system in particular as claimed in Claim 8, whereby the quantity of filler gas for filling and unfolding at least one impact cushion by evaporation of an evaporative liquid substance is produced, whereby the optionally required evaporation is caused by release of pressure of the liquid substance, **characterised in that** the evaporative liquid substance is water.

**10.** The process as claimed in Claim 9, **characterised in that** a quantity of liquid $m_o$ of the evaporative substance, in particular water, is conveyed to a pressure chamber having at least one seal, where the energy content of the quantity of liquid $m_o$ is to be determined by raising the pressure and the temperature (p, T) above the ambient temperature and the environmental pressure, such that when the pressure of the pressure chamber is released by opening at least one seal at least a sufficient quantity of liquid $m_o$ is evaporated for at least one impact cushion to be abruptly unfolded and filled with vapour.

**11.** The process as claimed in Claim 9 or 10, **characterised in that** an inert gas is added to the water.

**12.** The process as claimed in any one of Claims 9 to 11, **characterised in that** to achieve and maintain readiness for service of the restraint system the water in the sealed pressure chamber is heated to the extent where the quantity of liquid $m_o$ of the water has the energy content required for the evaporation to promptly unfold at least one impact cushion and fill it with vapour.

**13.** The process as claimed in Claim 12, **characterised in that** to achieve and maintain readiness for service of the restraint system the heat energy is obtained from an electric onboard power supply of a vehicle and/or from another heat source of the vehicle.

**14.** The process as claimed in Claim 13, **characterised in that**, the waste heat of the vehicle drive is used as an energy source.

**15.** The process as claimed in Claim 12 or 13, **characterised in that** to achieve and maintain the operating mode of the restraint system the energy is obtained from an electric onboard power supply only when there is defined residual energy present in an energy store of the onboard power supply.

**16.** The process as claimed in any one of Claims 9 to 15, **characterised in that** the quantity of filler gas for filling and unfolding several impact cushions is produced by central evaporation of water, whereby the required quantity of filler gas is distributed by means of lines and blocking- and/or distribution members to the individual impact cushions.

**Revendications**

**1.** Générateur de gaz en vue du dépliement et du remplissage d'au moins un coussin gonflable d'un système de retenue possédant un boîtier de générateur de gaz présentant au moins une fermeture en vue de la réception d'un combustible en vue de la génération d'une quantité de gaz de remplissage pour chaque coussin gonflable, le combustible présentant au moins une substance liquide capable de s'évaporer qui n'est pas combustible, le boîtier de générateur de gaz réalisé en tant que chambre de compression pouvant être chauffé, une quantité de liquide $m_o$ d'une substance capable de s'évaporer se trouvant dans la chambre de compression, laquelle contient la teneur en énergie pour le dépliage et le remplissage d'au moins un coussin gonflable en état de service du générateur de gaz, la teneur en énergie (enthalpie) résultant des conditions de pression et de température (p, T) en état de service de la quantité de liquide $m_o$ étant déterminée de manière à ce qu'en cas de décharge de pression de la chambre de pression par ouverture d'au moins une fermeture, au moins autant de la quantité de liquide $m_o$ s'évapore afin de déplier et de remplir de vapeur au moins un coussin gonflable de manière brutale, **caractérisé en ce que** la substance liquide capable de s'évaporer est de l'eau.

**2.** Générateur de gaz selon la revendication 1, **caractérisé en ce que** la chambre de compression (3) présente au moins un dispositif de chauffage (17, 18) afin de mettre et de maintenir le générateur de gaz en état de service.

**3.** Générateur de gaz selon la revendication 2, **caractérisé en ce que** le dispositif de chauffage est réalisé en tant que chauffage à résistance électrique (17, 18) et/ou en tant que chauffe-eau à électrodes.

**4.** Générateur de gaz selon l'une quelconque des revendications 1 à 3, **caractérisé en ce que** chaque fermeture (2) de la chambre de compression (3) est réalisée en tant que soupape ou membrane (21).

**5.** Générateur de gaz selon l'une quelconque des revendications 1 à 4, **caractérisé en ce que** le combustible présente exclusivement la substance liquide capable de s'évaporer.

**6.** Générateur de gaz selon l'une quelconque des revendications 1 à 5, **caractérisé en ce que** la chambre de compression (3) se compose d'un matériau imperméable à l'eau, résistant à la chaleur et à la pression.

**7.** Générateur de gaz selon l'une quelconque des revendications 1 à 6, **caractérisé en ce que** la chambre de compression (3) présente une isolation (4), notamment une isolation à vide.

**8.** Système de retenue pour véhicules possédant au moins un coussin gonflable relié à un générateur de gaz ainsi qu'au moins une unité de déclenchement et de surveillance commandant et/ou régulant le générateur de gaz, **caractérisé par** un générateur de gaz (1) selon l'une quelconque ou plusieurs des revendications 1 à 7.

**9.** Procédé en vue du remplissage et du dépliage d'au moins un coussin gonflable d'un système de retenue notamment selon la revendication 8, la quantité de gaz de remplissage en vue du remplissage et du dépliage d'au moins un coussin gonflable étant générée par l'évaporation d'une substance liquide capable de s'évaporer, l'évaporation nécessaire en cas de besoin étant provoquée par une décharge de pression de la substance liquide, **caractérisé en ce que** la substance liquide capable de s'évaporer est de l'eau.

**10.** Procédé selon la revendication 9, **caractérisé en ce qu'**une quantité de liquide $m_o$ de l'eau est amenée dans une chambre de compression présentant au moins une fermeture, la teneur en énergie de la quantité de liquide $m_o$ étant déterminée par augmentation de la pression et de la température (p, T) au-delà de la température environnante ainsi qu'au-delà de la pression environnante de manière à ce qu'en cas de décharge de pression de la chambre de compression par ouverture d'au moins une fermeture, au moins autant de la quantité de liquide $m_o$ s'évapore afin qu'au moins un coussin gonflable se déplie de manière brutale et soit rempli de vapeur.

**11.** Procédé selon la revendication 9 ou 10, **caractérisé en ce qu'**un gaz inerte est ajouté à l'eau.

**12.** Procédé selon l'une quelconque des revendications 9 à 11, **caractérisé en ce qu'**en vue d'atteindre et d'obtenir l'état de service du système de retenue, l'eau est chauffée dans la chambre de compression fermée jusqu'à ce que la quantité de liquide $m_o$ de l'eau présente la teneur en énergie nécessaire pour l'évaporation afin de déplier de manière brutale et de remplir de vapeur au moins un coussin gonflable.

**13.** Procédé selon la revendication 12, **caractérisé en ce que** l'énergie de chauffage en vue d'atteindre et d'obtenir l'état de service du système de retenue est obtenue à partir d'un réseau embarqué électrique d'un véhicule et/ou à partir d'une autre source de chaleur du véhicule.

**14.** Procédé selon la revendication 13, **caractérisé en ce que** la chaleur perdue de l'entraînement du véhicule est utilisée en tant que source d'énergie.

**15.** Procédé selon la revendication 12 ou 13, **caractérisé en ce que** l'énergie en vue d'atteindre et d'obtenir l'état de service du système de retenue est obtenue à partir d'un réseau embarqué électrique uniquement lorsqu'une énergie résiduelle définie est présente dans un réservoir d'énergie du réseau embarqué.

**16.** Procédé selon l'une quelconque des revendications 9 à 15, **caractérisé en ce que** la quantité de gaz de remplissage en vue du remplissage et du dépliage de plusieurs coussins gonflables est générée par une évaporation centrale d'eau, la quantité de gaz de remplissage nécessaire étant distribuée à l'aide de conduites et d'éléments de blocage et/ou de distribution aux coussins gonflables individuels.

# Figur 1

26
25
2
3
1
24

# Figur 2

150 bar
342°C
2675,4 kJ/kg
100°C
B
A
1606,1 kJ/kg
1 bar
417,5 kJ/kg
C
Enthalpie (kJ/kg)
Entropie (kJ/kgK)

Figur 3
P in bar
150
1
A
B
C
V in m³/kg
0,00103
0,00166
1,69400

Figur 4
1
2
3
4
5
6
7
8
9
11
12

15
3
13
14
7
6
9
5
1
8
2
12

Figur 5

15
13
14
3
16
17
1

Figur 6

Figur 7a
Figur 7b
Schnitt A-A
A
A
1
3
13
14
15
18
19

3
4
1
22
11
21
2
23

Figur 8